Europäisches Patentamt

European Patent Office

Office européen des brevets

(19)

(11) Veröffentlichungsnummer: **0 249 143**

A1

(12) **EUROPÄISCHE PATENTANMELDUNG**

(21) Anmeldenummer: **87108058.6**

(22) Anmeldetag: **04.06.87**

(51) Int. Cl.³: **E 02 F 3/02**
E 02 F 9/08, E 02 F 9/10

(30) Priorität: **11.06.86 DE 3619637**

(43) Veröffentlichungstag der Anmeldung:
**16.12.87 Patentblatt 87/51**

(84) Benannte Vertragsstaaten:
**AT CH DE FR LI**

(71) Anmelder: **Olbert, Herbert**
**Amorbacher Strasse 17**
**D-6930 Eberbach(DE)**

(72) Erfinder: **Olbert, Herbert**
**Amorbacher Strasse 17**
**D-6930 Eberbach(DE)**

(74) Vertreter: **Hach, Hans Karl, Dr.**
**Tarunstrasse 23**
**D-6950 Mosbach-Waldstadt(DE)**

(54) **Zweiachsiges Friedhofsfahrzeug.**

(57) Zur Vermeidung von seitlichen Kippbewegungen bei einem Friedhofsbagger (70) mit enger Spurweite wird das Niveau einzelner Räder (80, 81, 82) entsprechend den Unebenheiten der Fahrbahn verstellt.

FIG. 7

EP 0 249 143 A1

# ZWEIACHSIGES FRIEDHOFSFAHRZEUG

Die Erfindung betrifft ein zweiachsiges, mit Fahrantriebsmotor ausgestattetes Friedhofsfahrzeug, insbesondere Friedhofsbagger, mit mindestens drei Rädern, dessen eine mindestens mit einem Rad ausgestattete Achse als Freiachse ausgebildet ist, an der das Chassis frei um die Fahrzeuglängsachse schwenkbar gelagert ist.

Aus der DE-OS 24 50 236 ist ein solches Fahrzeug bekannt, das mit vier Rädern ausgestattet ist. Jede der beiden Achsen kann als Freiachse um die Fahrzeuglängsachse schwenkbar und nicht schwenkbar betrieben werden. Wenn die betreffende Achse nicht schwenkbar betrieben wird, wird die Schwenkmöglichkeit durch an die betreffende Achse angesetzte Hydraulikzylinder blockiert. Bei Arbeitsbetrieb ist immer nur eine der beiden Achsen als Freiachse betrieben, während die Schwenkbarkeit um die Fahrzeuglängsachse für die andere Achse blockiert ist.

Auf Friedhöfen stehen nur schmale Fahrwege zur Verfügung und deshalb müssen Friedhofsfahrzeuge mit enger Spurbreite ausgebildet sein. Friedhöfe sind oft an Hanglagen angeordnet und die Friedhofswege, insbesondere Abzweigungen, bieten nicht immer sicheren, ebenen Grund. Das führt in Verbindung mit der engen Spurbreite zu einer Beschränkung des Einsatzes oder zur Gefahr des Umkippens.

Aufgabe der Erfindung ist es, ein Fahrzeug der eingangs genannten Art so auszugestalten, daß es mit enger Spurbreite auch auf unebenem Untergrund sicher fahren kann.

0249143

Die Erfindung ist dadurch gekennzeichnet, daß Niveaumittel zum Ausgleich von Neigungsbewegungen des Chassis um die Fahrzeuglängsachse infolge von Unebenheiten in der Fahrbahn vorgesehen sind, daß die andere Achse mit zwei Rädern und als Niveauachse ausgebildet ist, der gegenüber das Chassis gesteuert aktiv schwenkbar um die Fahrzeuglängsachse gelagert ist und daß Niveauantriebsmittel für diese aktive Schwenkbewegung vorgesehen sind, die am Chassis einerseits und an der Niveauachse andererseits angreifen.

Es können beide Achsen als Niveauachsen ausgebildet sein. Bevorzugt, weil einfacher, ist aber eine Ausgestaltung, bei der nur eine Achse als Niveauachse und die andere als Freiachse ausgebildet ist. Die Ausgestaltung mit zwei Niveauachsen ist dann vorteilhaft, wenn sehr starke und veränderliche Neigungen der Fahrbahn zu überwinden sind.

Durch die aktiv gesteuerte Niveauachse beziehungsweise die aktiv gesteuerten Niveauachsen kann das Fahrzeug unabhängig von Neigungen des Untergrundes, die zu unterschiedlichem Unterstützungsniveau inden beiden Spuren führen, immer horizontal gehalten werden. Der Schwerpunkt des Fahrzeuges bleibt dann zwischen den Rädern und das Fahrzeug kann nicht kippen. Wenn das Chassis ohne Seitenneigung gehalten wird, ist diese Bedingung auch erfüllt bei sehr hoch gelegenem Schwerpunkt, wie es bei Friedhofsbaggern der Fall ist, die wegen des hohen Schwerpunktes schon bei leichter Seitenneigung des Chassis zum Kippen neigen. Das ist der Grund, weshalb die Erfindung bevorzugt bei Friedhofsbaggern anwendbar ist.

Das Ansteuern der Niveauantriebsmittel kann selbsttätig erfolgen mittels eines gegenüber dem Chassis festgelegten Niveaumessers. Das Ansteuern kann aber auchvon Hand durch

0249143

den Fahrzeugführer erfolgen mit einer von Hand bedienbaren Handhabe für die Niveauantriebsmittel. In einem solchen Fall empfiehlt es sich, dem Fahrzeugführer einen Niveaumesser zur Verfügung zu stellen, der am Chassis angeordnet ist. Solche Niveaumesser enthalten ein Element, das durch Schwerkraft ständig in Horizontallage gehalten wird. Die Abweichung der Seitenneigung von dieser Horizontallage wird als Meßergebnis angezeigt und als Stellgröße zur Ansteuerung der Niveauantriebsmittel vom Niveaumesser abgeleitet.

Es sind Friedhofsfahrzeuge, insbesondere Friedhofsbagger, bekannt, die mit einer Steuerdeichsel, die als Schwenkhebel zur Bestimmung der Fahrtrichtung ausgebildet ist, und zur Bedienung durch einen nachlaufenden Fahrzeugführer eingerichtet sind. Am freien Ende der Steuerdeichsel befinden sich dann die Bedienungselemente für den Antrieb des Fahrzeugs und im Falle, daß die Ansteuerung der Niveauantriebsmittel von Hand erfolgt, ordnet man am freien Ende der Steuerdeichsel dann auch die Handhabe für die Niveauantriebsmittel an.

Die eine Fahrzeugachse ist als Steuerachse für die Kurvensteuerung ausgebildet. Man könnte diese Steuerachse gleichzeitig auch als Niveauachse ausbilden. Das empfiehlt sich aber im allgemeinen nicht. Besser ist es, die andere Achse als Niveauachse auszubilden und dann mit Bezug auf die Fahrtrichtung drehfest am Chassis zu lagern. Das führt erfahrungsgemäß insgesamt zu einer einfacheren und betriebssichereren Ausgestaltung.

Bei einem dreirädrigen Fahrzeug empfiehlt es sich, die, bezogen auf die Vorwärtsfahrt, rückwärtige Achse mit nur einem Rad auszustatten und als Steuerachse auszubilden und für die Steuerbewegung mechanisch an eine Steuerdeichsel zu kuppeln, die dann von einem nachlaufenden Fahrzeugführer bedient wird. In diesem Fall ist dann die vordere Achse mit zwei Rädern ausgerüstet und als Niveauachse ausgebildet.

Die Niveauachse kann für jedes Rad einen am Chassis gelagerten Träger aufweisen. Von diesen Trägern muß mindestens einer umdie Fahrzeuglängsachse schwenkbar sein. Es können auch beide Träger umdie Fahrzeuglängsachse schwenkbar sein. Für den einen beziehungsweise beide schwenkbaren Träger ist dann zweckmäßig ein hydraulischer Zylinder der Niveauantriebsmittel vorgesehen, der einerseits am zugehörigen Träger und andererseits am Chassis abgestützt ist. Wenn beide Träger schwenkbar sind, werden sie zum Niveauausgleich gegenläufig von den hydraulischen Zylindern geschwenkt. In diesem Fall kann man durch gleichsinniges Betätigen der beiden Träger das Chassis um eine Horizontalachse quer zur Fahrzeuglängsachse schwenken und damit weitere Fahrbahnunebenheiten ausgleichen.

Bei dreirädrigen Fahrzeugen ist die mit nur einem Rad ausgerüstete Achse die Freiachse. Das eine Rad ist dann zweckmäßig, bezogen auf die Fahrzeuglängsachse, drehfest am Chassis gelagert, weil das zu einer besonders einfachen Ausgestaltung führt. Dieses Rad ist dannbei seitlicher Neigung der Fahrbahn mit seiner Drehachse entsprechend gegenüber der Fahrbahn geneigt, wenn das Chassis infolge der Wirkung der Niveauantriebsmittel auf horizontalem Niveau gehalten wird.

Eine bevorzugte Ausgestaltung der Erfindung ist dadurch gekennzeichnet, daß eine Baggerschaufel an dem mit der Niveauachse ausgestatteten Ende des Fahrzeugs angeordnet ist. Diese Ausgestaltung ist deshalb vorteilhaft, weil die hohe Gewichtsbelastung und die möglicherweise vorliegende hohe seitliche Belastung, hervorgerufen durch das Gewicht der leeren Baggerschaufel aber insbesondere auch bei Betrieb durch das Gewicht der beladenen Baggerschaufel, dann durch die aktiv in eine dem Bodenniveau angepaßte Schwenkstellung
gestellte Niveauachse aufgefangen werden kann, wodurch einer
eventuellen Kippneigung des Fahrzeuges besonders wirksam
entgegengewirkt werden kann.

Für längeren Baggerbetrieb empfiehlt sich eine
Ausgestaltung, die dadurch gekennzeichnet ist, daß am Chassis vier den vier Ecken des Chassisgrundrisses zugeordnete
Stützen angeordnet sind, daß diese Stützen, jede für sich,
in eine wirkungslose Ruhestellung einstellbar sind, inder
sie die Vorwärtsfahrt nicht behindern, daß diese Stützen in
eine wirksame Stützstellung einstellbar sind, in der sie außerhalb des Grundrisses des Chassis das Fahrzeug auf dem Boden abstützen, daß jede einzelne Stütze gelenkig ausgebildet
und gelagert ist und daß für jede einzelne Stütze ein gesondertes Antriebsmittel vorgesehen ist, das unabhängig von den
anderen Antriebsmitteln differenziert aktivierbar ist.

Diese Stützen bieten die Möglichkeit, das Fahrzeug während
des Baggerbetriebes zusätzlich gegen Abkippen abzustützen,
wobei die Stützen durch ihre individuelle und differenzierte
Einstellbarkeit den Bodenunebenheiten angepaßt eingestellt
werden können.

Die Erfindung wird nun anhand der beigefügten Zeichnung näher erläutert.

In der Zeichnung zeigt:

| | |
|---|---|
| Figur 1 | ein dreirädriges Chassis von vorn gesehen, |
| Figur 2 | die Ansicht gemäß dem Pfeil II aus Figur 1, |
| Figur 3 | die Ansicht wie in Figur 1, jedoch beim Fahren auf einer schrägen Unterlage, |
| Figur 4 | ein weiteres Chassis von der Seite gesehen, |
| Figur 5 | ein weiteres Chassis von vorn gesehen, |
| Figur 6 | die Ansicht gemäß dem Pfeil VI aus Figur V, |
| Figur 7 | einen Friedhofsbagger von vorn gesehen bei Fahrt durch eine rechts gelegene Mulde, |
| Figur 8 | die Ansicht gemäß dem Pfeil VIII aus Figur 7, |
| Figur 9 | den Friedhofsbagger aus Figur 7 beim Überfahren einer rechts gelegenen Bodenwelle, |
| Figur 10 | die Ansicht gemäß dem Pfeil X aus Figur 9, |
| Figur 11 | den Friedhofsbagger aus Figur 7 beim Durchfahren einer links gelegenen Mulde, und |
| Figur 12 | die Ansicht gemäß dem Pfeil XII aus Figur 11. |

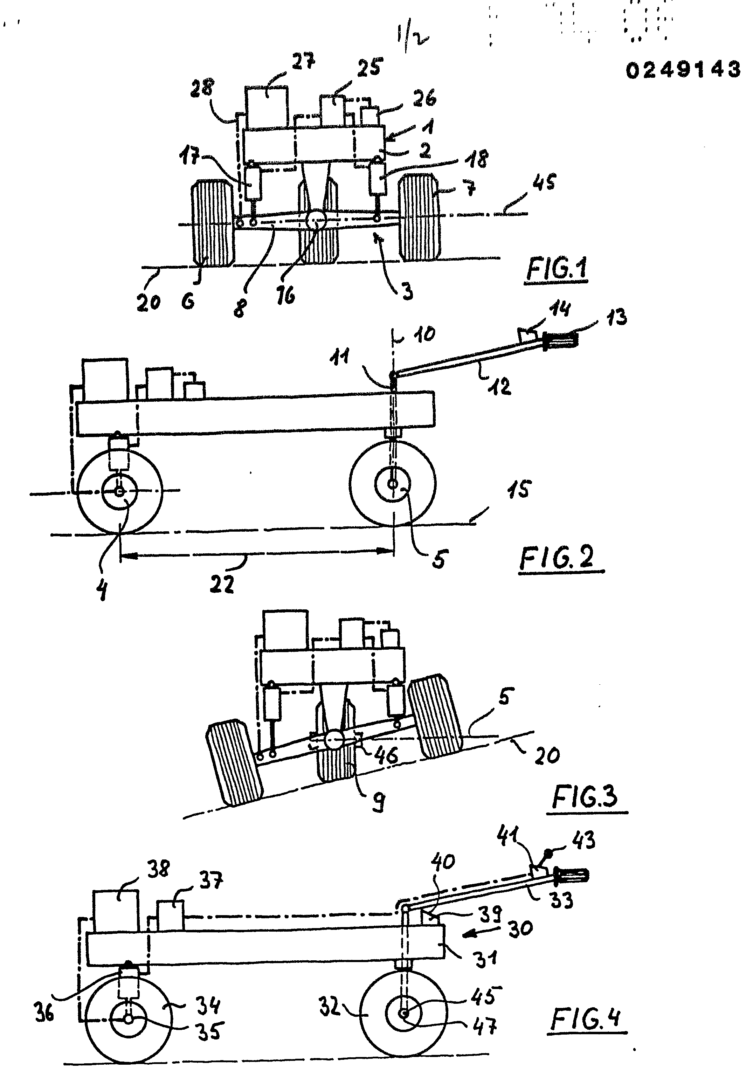

Die Darstellungen in den Figuren 1 bis 6 sind nur stilisiert und es sind nur die für die Erfindung wesentlichen Teile dargestellt. Die übrigen Aufbauten und Ausrüstungen sind in bekannter Weise ausgebildet.

In den Figuren 1 bis 3 ist mit 1 das Chassis bezeichnet, an dessen Rahmen 2 das Fahrgestell 3 gelagert ist. Das Fahrgestell ist zweiachsig, die vordere geometrische Achse ist mit 4 und die rückwärtige geometrische Achse mit 5 bezeichnet. Die vordere Radachse 8 ist mit zwei Rädern 6 und 7 ausgestattet, während für die rückwärtige geometrische Achse 5 nur ein einziges Rad 9 vorgesehen ist, das in der Spurenmitte der beiden vorderen Räder 6 und 7 angeordnet ist. Das Rad 9 ist lenkbar gelagert an einer um die Vertikalachse 10 drehbar gelagerten Welle 11, an die eine nach rückwärts gerichtete Steuerdeichsel 12 gekuppelt ist. Das

P 49 110 2.6.1987.
0249143

freie Ende der Steuerdeichsel 12 ist als Handgriff 13 für
eine dem Fahrzeug nachlaufende Bedienungsperson ausgerüstet. Im Bereich des Handgriffs 13 ist ein Bedienungspult 14 angeordnet.

Die vordere Radachse 8 ist nicht lenkbar, sie ist aber
schwenkbar um die Fahrzeuglängsachse 15 in einem Schwenklager 16 gelagert. Die vordere Radachse 8 stützt sich mit
zwei hydraulischen Zylindern 17, 18, die an beiden Seiten
des Schwenklagers 16 angeordnet sind, auf dem Rahmen 2 ab.
Die beiden hydraulischen Zylinder 17, 18 werden gegenläufig betätigt, und zwar so, daß die vordere Radachse 8 immer dann eine wie in Figur 3 dargestellte geneigte Stellung einnimmt, wenn die Fahrbahn 20 geneigt ist oder, bedingt durch Mulden oder Bodenwellen, für die Räder eine
geneigte Unterstützung bietet.

Die hydraulischen Zylinder 17, 18 werden so angesteuert,
daß durch die Neigung der vorderen Radachse Schräglagen
des Rahmens 2 vermieden werden. Der Rahmen 2 bleibt also,
unabhängig von Neigungen der Fahrbahn, bezogen auf die
Fahrzeuglängsachse 15 immer horizontal. Bei Bergauffahrt
oder Bergabfahrt wird das Fahrzeug, bezogen auf eine Horizontalachse quer zur Fahrzeuglängsachse 15, bergan oder
bergab geneigt. Diese Neigung wird durch die Schräglage
der vorderen Radachse nicht ausgeglichen, der Ausgleich
ist auch nicht erforderlich, weil der Achsabstand gemäß
Doppelpfeil 22 auch zum Befahren enger Friedhofswege ausreichend groß gemacht werden kann, so daß vorwärtige Neigungen bei Bergauf- und Bergabfahrt die Stabilität des
Fahrzeuges nicht gefährden, im Gegensatz zu seitlichen
Neigungen, die, bedingt durch die erforderliche enge Spurbreite beim Befahren enger Wege gemäß Doppelpfeil 23, sehr
hoch ist, insbesondere bei den hohen erforderlichen Aufbauten von Friedhofsfahrzeugen, besonders Friedhofsbaggern, die zu einem hochgelegenen Fahrzeugschwerpunkt füh-

P 49 110 2.6.1957

0249143

ren.

Die Steuerung der Schräglage der vorderen Radachse in Abhängigkeit von den Fahrbahnunebenheiten erfolgt durch ein Niveausteuergerät 25, das, wie durch strichpunktierte Linien angedeutet, die hydraulischen Zylinder 17, 18 betreibt. Das Niveausteuergerät 25 arbeitet in Abhängigkeit von den Meßergebnissen eines Niveaumeßgerätes 26, das fest auf dem Rahmen 2 montiert ist und seitliche Neigungen des Rahmens gegenüber der Horizontalen mißt und anzeigt.

Mit 27 ist der Fahrzeugantriebsmotor bezeichnet, der, wie durch die strichpunktierte Linie 28 angedeutet, antreibend auf die Vorderräder 6, 7 wirkt.

Bei dem in Figur 4 dargestellten Chassis 30 ist der Rahmen mit 31 bezeichnet. Hinten ist ein Rad 32 vorgesehen, das, wie beim ersten Ausführungsbeispiel, über eine Steuerdeichsel 33 als Lenkrad betätigt werden kann. Die beiden Vorderräder, von denen nur das Vorderrad 34 sichtbar ist, sind an der vorderen Radachse 35 gelagert, die, wie die vordere Radachse 8, nicht lenkbar aber seitlich schwenkbar ausgebildet ist. Zum Schwenken der vorderen Radachse 35 dienen zwei hydraulische Zylinder, von denen nur der Zylinder 36 sichtbar ist, die von einem Steuergerät 37 entsprechend dem Niveausteuergerät 25 angesteuert werden. Mit 38 ist der Fahrzeugantriebsmotor bezeichnet, der antreibend auf die Vorderräder wirkt. Der dem Niveaumeßgerät 26 entsprechende Niveaumesser ist mit 39 bezeichnet und mit einer Anzeige 40 ausgestattet, die von dem dem Fahrzeug nachlaufenden Fahrzeugführer abgelesen werden kann. An dem dem Bedienungspult 14 entsprechenden Bedienungspult 41 ist ein Handhebel 43 angeordnet, mit dem die Bedienungsperson das Steuergerät 37 in Abhängigkeit von den an der Anzeige 40 abgelesenen Meßwerten oder auch nach Gefühl ansteuern kann zur Auslösung von Schwenkbewegungen der vorderen Radachse 35 zum Ausgleich beziehungsweise zur Verhinderung
von Seitenlagen des Chassis bei Vorwärtsfahrt über entsprechende Unebenheiten der Fahrbahn.

Bei den Ausführungsbeispielen nach Figur 1 bis 4 wird das
Hinterrad 9 beziehungsweise 32 zum Ausgleich der Seitenneigung nicht angesteuert. Die geometrischen Achsen 5 und
45 lenken nur zur Lenkbewegung, nicht dagegen zum Neigungsausgleich. Das ist deshalb nicht nötig, weil die geometrische Hinterachse 5 beziehungsweise 45, wie ein Vergleich von Figur 1 und 3 zeigt, gegenüber der Fahrbahn beliebige Winkellagen einnehmen kann. Eine mit nur einem Rad
9 beziehungsweise 32 ausgestattete Radachse 46 beziehungsweise 47 ist, bezogen auf die seitliche Neigungslage der
Fahrbahn, eine Freiachse. Das ist nicht der Fall, wenn
eine Achse mit zwei Rädern an den Enden ausgestattet ist.

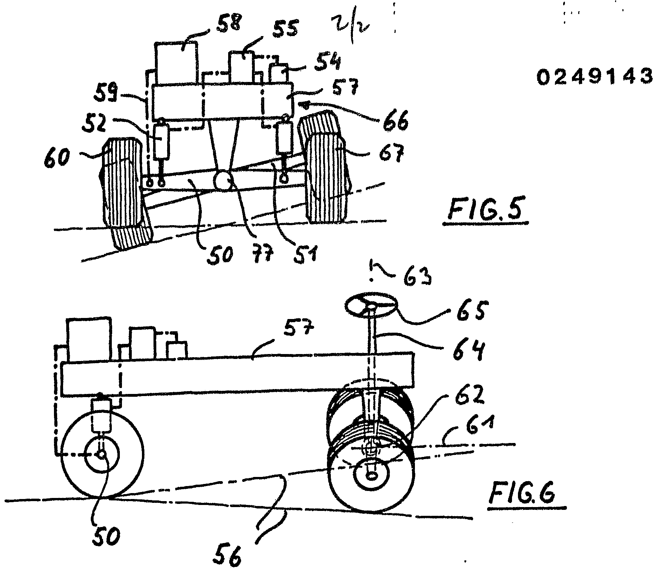

Bei dem in Figur 5 und 6 dargestellten Ausführungsbeispiel
sind beide Radachsen - die vordere Radachse 50 und die
hintere Radachse 51 - mit zwei Rädern ausgestattet. Die
vordere Radachse 50 wird als Niveauachse betrieben wie die
vorderen Radachsen 8 und 35 und mittels hydraulischer Zylinder 52, 53, angesteuert von dem Steuergerät 55, den
Schräglagen der Fahrbahn 56 entsprechend geschwenkt. Zu
dem Steuergerät 55 gehört der Niveaumesser 54, der am Rahmen 57 befestigt ist. Der Fahrzeugantriebsmotor 58 ist,
wie durch die strichpunktierte Linie 59 angedeutet, an die
Vorderräder 60, 67 gekuppelt. Die Niveausteuerung mittels
der vorderen Radachse 50 - der Niveauachse - erfolgt also
genauso wie beim Ausführungsbeispiel nach Figur 1 bis 3.

Die hintere Radachse 51 ist als Freiachse ausgebildet und
zu diesem Zweck frei schwenkbar um die Fahrzeuglängsachse
61 in einem Gelenk 62 gelagert. Um eine Vertikalachse 63
ist die Freiachse in diesem Gelenk 62 drehfest gelagert.
Das Gelenk 62 ist an der Lenksäule 64 montiert, die ihrer-

P 49 110  2.6.1987
0249143

seits schwenkbar um die Vertikalachse 63 im Rahmen 57 gelagert ist und mittels eines Steuerrades 65 zur Kurssteuerung hin- und hergeschwenkt werden kann.

Die Neigung des Chassis zur Seite, also bezogen auf die
Fahrzeuglängsachse 61, wird allein bestimmt durch die vordere Radachse 50 und diese wird so angesteuert, daß sie
Neigungsbewegungen des Chassis 66 zur Seite, infolge von
Fahrbahnunebenheiten, vermeidet.

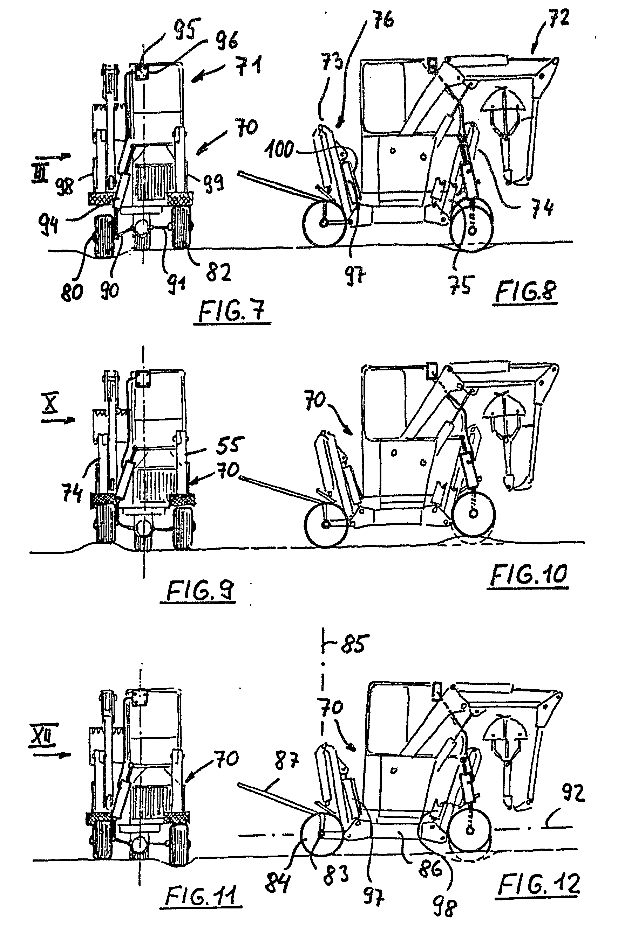

In den Figuren 7 bis 12 sind die Fahrzeugaufbauten eines
allgemein mit 70 bezeichneten Friedhofsbaggers mit eingezeichnet. Diese Fahrzeugaufbauten sind allgemein mit 71
bezeichnet. Dazu gehört eine Baggerschaufel 72 und an den
vier Ecken angeordnete, ausschwenkbare Stützen 73 bis 76,
die ausgefahren werden und dem Bagger eine breitere Unterstützung auf der Fahrbahn bieten, wenn das Fahrzeug stillsteht und als Bagger betrieben wird. Bei Fahrt sind diese
Stützen 73 bis 76 wie dargestellt eingezogen.

Die vier Stützen 73 bis 76 sind, jede für sich, in eine
wirkungslose Ruhestellung einstellbar, in der sie die Vorwärtsfahrt nicht behindern. In dieser Stellung sind die
Stützen in Figur 7 bis 12 gezeichnet. Die Stützen sind in
eine wirksame Stützstellung einstellbar, in der sie das
Fahrzeug außerhalb des Grundrisses des Chassis auf dem
Boden abstützen. Die Bewegung der Stützen erfolgt durch je
einen jeweils zugeordneten hydraulischen Zylinder 97 bis
100, der sich einerseits an der betreffenden Stütze und
andererseits am Chassis abstützt. Diese Zylinder sind
differenziert und unabhängig voneinander zu betätigen, so
daß man die einzelnen Stützen in ihrer wirkungsvollen
Stellung den Bodenunebenheiten angepaßt auf dem Boden
abstützen kann.

Die Baggerschaufel 72 ist an dem in Figur 8 rechts
gezeichneten Ende des Chassis 89 angeordnet, an dem auch
die als Niveauachse ausgebildete vordere Radachse 80
angeordnet ist. Die vordere als Niveauachse ausgebildete
Radachse 80 ist mit zwei Rädern 81, 82 ausgerüstet. Die
hintere Radachse 83 ist Freiachse und mit einem Rad 84
ausgerüstet, das in der Mitte zwischen der Spur der
Vorderräder 81, 82 angeordnet ist.

Das Hinterrad 84 dient als Lenkrad, es ist zu diesem Zweck
schwenkbar um eine Vertikalachse 85 am Rahmen 86 gelagert,
und durch eine Steuerdeichsel 87 von einer nachlaufenden
Bedienungsperson schwenkbar. Die vordere Radachse 80 ist
nicht als Lenkachse ausgebildet, sie weist für jedes der
Räder 81, 82 einen Träger 90, 91 auf. Der Träger 90 ist
schwenkbar um die Fahrzeuglängsachse 92 am Rahmen 86 gelagert, und stützt sich über einen hydraulischen Zylinder
94 am Rahmen ab. Der hydraulische Zylinder wird von einem
dem Niveausteuergerät 25 entsprechenden Steuergerät 95
angesteuert, und zwar in Abhängigkeit von den Meßwerten
eines dem Niveaumesser 56 entsprechenden in das Steuergerät 95 eingebauten Niveaumesser 96. Durch entsprechende
Auf- und Absteuerung des Rades 81 können Bodenunebenheiten
und Neigungen in der Weise ausgeglichen werden, daß sich
das Fahrzeug nicht um die Fahrzeuglängsachse 92 zur Seite
neigt, sondern bezogen auf die Fahrzeuglängsachse 92 aufrecht bleibt, mithin also auch bei enger Spurbreite nicht
zur Seite kippen kann. In Abänderung dieses Ausführungsbeispiels kann man auch den Träger 91 schwenkbar ausgestalten und mit einem dem hydraulischen Zylinder 94 entsprechenden zusätzlichen hydraulischen Zylinder entsprechend den Bodenneigungen ansteuern. Zum Ausgleich von
Bodenunebenheiten werden diese beiden Zylinder dann gegenläufig betrieben, man kann sie aber auch gleichläufig oder
zusätzlich gleichläufig betreiben, um damit Vorwärts- und
Rückwärtsneigungen des Fahrzeuges auszugleichen.

**PATENTANSPRÜCHE**

1. Zweiachsiges, mit Fahrantriebsmotor ausgestattetes Friedhofsfahrzeug, insbesondere Friedhofsbagger, mit mindestens drei Rädern, dessen eine mindestens mit einem Rad ausgestattete Achse als Freiachse ausgebildet ist, an der das Chassis frei um die Fahrzeuglängsachse schwenkbar gelagert ist, dadurch gekennzeichnet,

daß Niveaumittel ( 16, 17, 18, 25, 16 ) zum Ausgleich von Neigungsbewegungen des Chassis ( 1 ) um die Fahrzeuglängsachse ( 15 ) infolge von Unebenheiten in der Fahrbahn vorgesehen sind,

daß die andere Achse ( 8 ) mit zwei Rädern ( 6, 7 ) und als Niveauachse ausgebildet ist, der gegenüber das Chassis gesteuert aktiv schwenkbar um die Fahrzeuglängsachse gelagert ist und

daß Niveauantriebsmittel für diese aktive Schwenkbewegung vorgesehen sind, die am Chassis einerseits und an der Niveauachse andererseits angreifen.

2. Fahrzeug nach Anspruch 1, dadurch gekennzeichnet,

daß zum selbsttätigen Ansteuern der Niveauantriebsmittel (16, 17, 18, 25, 26 ) ein gegenüber dem Chassis ( 1 ) festlegbarer Niveaumesser ( 26 ) vorgesehen ist.

3. Fahrzeug nach einem der vorhergehenden Ansprüche, dadurch gekennzeichnet,

daß zum Ansteuern der Niveauantriebsmittel ( 36, 37 ) eine vom Fahrzeugführer bedienbare Handhabe ( 43 ) vorgesehen ist und

daß ein Niveaumesser ( 39 ) vorgesehen ist, der aus der Sicht des tätigen Fahrzeugführers ablesbar ist.

4. Fahrzeug nach einem der vorhergehenden Ansprüche, gekennzeichnet durch

die Ausrüstung mit einer Steuerdeichsel ( 33 ), die als
Schwenkhebel zur Bestimmung der Fahrtrichtung ausgebildet
und zur Bedienung durch einen nachlaufenden Fahrzeugführer
eingerichtet ist, und dadurch

daß am freien Ende der Steuerdeichsel die Handhabe ( 43 )
für die Niveauantriebsmittel ( 36, 37 ) vorgesehen ist.

5. Fahrzeug nach einem der vorhergehenden Ansprüche, dadurch
gekennzeichnet,

daß die eine Fahrzeugachse ( 46 ) als Steuerachse für die
Kurvensteuerung ausgebildet ist und

daß die andere Achse - die Niveauachse ( 8 ) - in Bezug
auf die Fahrtrichtung drehfest am Chassis  ( 1 ) gelagert
ist.

6. Fahrzeug nach einem der vorhergehenden Ansprüche, dadurch
gekennzeichnet,

daß bei einem dreirädrigen Fahrzeug die, bezogen auf die
Vorwärtsfahrt, rückwärtige Achse ( 46 ) mit nur einem Rad
(9) ausgestattet und als Steuerachse ausgebildet ist und für
die Steuerbewegung mechanisch an eine Steuerdeichsel ( 12 )
gekuppelt ist, und

daß die vordere Achse, die mit zwei Rädern ( 6, 7 ) ausgerüstet ist, als Niveauachse ( 8 ) ausgebildet ist.

7. Fahrzeug nach einem der vorhergehenden Ansprüche, dadurch
gekennzeichnet,

daß die Niveauachse ( 80 ) für jedes Rad ( 81, 82 ) einen
am Chassis gelagerten Träger ( 90, 91 ) aufweist, von denen
mindestens der eine Träger ( 90 ) um die Fahrzeuglängsachse
( 92 ) schwenkbar am Chassis gelagert ist, und

daß für jeden schwenkbaren Träger ein hydraulischer Zylinder ( 94 ) der Niveauantriebsmittel vorgesehen ist, der einerseits am zugehörigen Träger und andererseits am Chassis abgestützt ist.

8. Fahrzeug nach einem der vorhergehenden Ansprüche, dadurch gekennzeichnet,

daß die Niveauachse ( 51 ) und/oder die Steuerachse (50) mit zwei Rädern ausgestattet ist, und für beide Räder durchgehend ausgebildet ist und in der Fahrzeuglängsmitte schwenkbar um die Fahrzeuglängsachse ( 92 ) am Chassis gelagert ist.

9. Fahrzeug nach einem der vorhergehenden Ansprüche, dadurch gekennzeichnet,

daß eine Baggerschaufel ( 72 ) an dem mit der Niveauachse ( 90, 91 ) ausgestatteten Ende des Fahrzeugs angeordnet ist.

10. Fahrzeug nach einem der vorhergehenden Ansprüche, dadurch gekennzeichnet,

daß am Chassis ( 89 ) vier den vier Ecken des Chassisgrundrisses zugeordnete Stützen ( 73 - 76 ) angeordnet sind,

daß diese Stützen, jede für sich, in eine wirkungslose Ruhestellung einstellbar sind, in der sie die Vorwärtsfahrt nicht behindern,

daß diese Stützen in eine wirksame Stützstellung einstellbar sind, in der sie außerhalb des Grundrisses des Chassis das Fahrzeug auf dem Boden abstützen,

daß jede einzelne Stütze gelenkig ausgebildet und gelagert ist und

daß für jede einzelne Stütze ein gesondertes Antriebsmittel ( 97 - 100 ) vorgesehen ist, das unabhängig von den anderen Antriebsmitteln differenziert aktivierbar ist.

0249143

FIG.1

FIG.2

FIG.3

FIG.4

0249143

FIG.5

FIG.6

D 49110 - 2/3

0249143

FIG.7

FIG.8

FIG.9

FIG.10

FIG.11

FIG.12

0249143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 580 797 (ERICSSON) <br> * Das ganze Dokument * | 1,5-9 | E 02 F 9/02 <br> E 02 F 9/08 <br> E 02 F 9/10 |
| A | | 2 | |
| X | FR-A-1 370 019 (ALLARD) <br> * Das ganze Dokument * | 1,7,8 | |
| A | | 2 | |
| A | EP-A-0 065 118 (E. MENZI) <br> * Figuren 1-8 * | 1,6,10 | |
| A | US-A-3 442 530 (G.L. GUINOT) <br> * Figur 1 * | 1,9,10 | |
| A | FR-A-2 254 687 (H. BOOS) <br><br> * Figuren 1-10 * | 1,3,9,10 | |
| A | DE-A-3 334 300 (K. KLOSS) <br> * Seite 7, Zeilen 3,4; Figuren 1-3 * | 1,3 | |
| A | DE-A-3 230 659 (K. GILBERS) <br> * Figuren 1-4 * | 1 | |
| | --- -/- | | |

**RECHERCHIERTE SACHGEBIETE (Int. Cl.4)**

E 02 F

Der vorliegende Recherchenbericht wurde für alle Patentansprüche erstellt.

| Recherchenort | Abschlußdatum der Recherche | Prüfer |
|---|---|---|
| DEN HAAG | 03-09-1987 | ANGIUS P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | PATENT ABSTRACTS OF JAPAN, Band 10, Nr. 126 (M-477)[2183], 10. Mai 1986; & JP-A-60 253 629 (HITACHI KENKI K.K.) 14-12-1985 | 1 | |
| A | FR-A-1 383 763 (SOCIETE D'APPLICATIONS DES MACHINES MOTRICES) * Spalte 1, Zeilen 16-26; Figuren 1-4 * | 1,2 | |
| A | GB-A-1 201 364 (H. HAGELSTEIN) | | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 03-09-1987 | Prüfer ANGIUS P. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82